# EUROPÄISCHE PATENTANMELDUNG

(11) **EP 0 874 479 A2**
(43) Veröffentlichungstag der Anmeldung: **28.10.1998**
(21) Anmeldenummer: 98106653.3
(22) Anmeldetag: 11.04.1998
(51) Int. Cl.: H04B 10/10

(54) **Vorrichtung zur drahtlosen optischen Übertragung**

(30) Priorität: 15.04.1997 DE 19715636
(71) Anmelder: Renfer, Robert Otto, 8305 Dietlikon (CH)
(72) Erfinder: Renfer, Robert Otto, 8305 Dietlikon (CH)

(57) **Zusammenfassung**

Die erfindungsgemässe Vorrichtung zur freiräumlichen optischen Übertragung von Daten-, Sprach-, Ton- und Bildinformationen umfasst ein Sendemodul 2 mit einer Laserdiode, eine Sendeoptik 4, ein Empfangsmodul 1 mit einer Avalanchephotodiode, eine Navigationshilfe und/oder eine Zielvorrichtung 5, eine oder mehrere Schaltplatine(n) und/oder eine oder mehrere Hybrideinheit(en), eine oder mehrere Justiervorrichtung(en) und einen Anschluss 6 für den gemeinsamen Einlass von Strom und Steuerimpulsen. Es werden modulierte Lichtpulse bei 904 nm oder 267 nm gesendet. Für eine bidirektionale Übertragung sind das Sendemodul 2, das Empfangsmodul 1 und ein Zielfernrohr 5 auf einer gemeinsamen Grundplatte befestigt und zum Teil separat justierbar. Die Vorrichtung ist sehr einfach zu installieren. Sie ist besonders zur optischen Kommunikation über mehrere km Distanz bei schlechten Witterungs- und Sichtverhältnissen geeignet.

## Beschreibung

Die vorliegende Erfindung betrifft eine Vorrichtung zur drahtlosen freiräumlichen optischen Übertragung.

Bei der im Stand der Technik bekannten freiräumlichen optischen Übertragung von Daten-, Sprach-, Ton- und Bildinformationen werden im allgemeinen zwei Sendeeinheiten und Zwei Empfangseinheiten eingesetzt. Es werden also insgesamt 4 Geräte benötigt. Diese Art der Übertragung ist sehr umständlich, weil sowohl für die Hinübertragung als auch für die Rückübertragung paarweise eine Sendeeinheit und eine Empfangseinheit benötigt werden. Somit müssen unabhängig voneinander zwei Übertragungsstrecken justiert werden.

Die bekannten Geräte funktionieren erfahrungsgemäss nur bei guten bis sehr guten Witterungs- und Sichtverhältnissen. Sobald leichter Nebel oder starker Regen auftritt, wird die genannte Übertragung negativ beeinträchtigt oder verunmöglicht. Mit den bekannten Geräten sind Übertragungen über Distanzen von etwa 1 km möglich. Mit den bekannten Geräten sind bei den besten Witterungs- und Sichtverhältnissen Übertragungen über Distanzen von mehr als 2,5 km nicht möglich. Diese Geräte weisen im allgemeinen einen grossen Stromverbrauch von mehreren Ampère / Stunde auf. Zudem werden in den bekannten Geräten ungeeignete Modulationsverfahren verwendet, beispielsweise solche Modulationsverfahren, wie sie in "Lasertechnik", 2. Auflage, 1984, Hüthig Verlag Heidelberg, Seiten 429 bis 441, und in "Laser" 4. Auflage, 1979, Vogel-Verlag Würzburg, Seiten 91 bis 99 beschrieben sind.

Zur Verbesserung der Übertragung bei schlechtem Wetter wurden bisher ungenügende oder extrem aufwendige Massnahmen ergriffen. Beispielsweise ist es aus der DE 1 268 528 bekannt, zur optischen Informationsübertragung eine Wellenlänge mit minimaler Absorption bei atmosphärischer Feuchtigkeit zu wählen und darüberhinaus die Atmosphäre mit einem hochenergetischen Laserstrahl zu reinigen.

Es ist das Ziel der vorliegenden Erfindung, eine verbesserte Vorrichtung zur freiräumlichen optischen Übertragung zu Verfügung zu stellen, mit welcher die oben genannten Nachteile überwunden werden können.

Es ist ein wichtiges Ziel der vorliegenden Erfindung, Übertragungen auch bei schlechten Witterungs- und Sichtverhältnissen zu ermöglichen. Insbesondere sollen Übertragungen auch bei schlechtem Wetter über Distanzen von mehr als 2,5 km ermöglicht werden.

Durch die vorliegende Erfindung soll ferner eine Vorrichtung zur freiräumlichen optischen Übertragung zu Verfügung gestellt werden, welche auch für eine bidirektionale Übertragung nur 2 Geräte benötigt.

Es soll auch eine Vorrichtung zur freiräumlichen optischen Übertragung geschaffen werden, bei der nur eine Übertragungsstrecke justiert werden muss.

Es ist ein weiterer Zweck der vorliegenden Erfindung, durch einen triaxialen Aufbau der Sende- und Empfangseinheiten eine schnelle, gegenseitige Ausrichtung zu ermöglichen.

Diese neuen Vorrichtungen sollen auch einen geringen Stromverbrauch aufweisen, beispielsweise 0,5 Ampère bei 12 V Gleichspannung und bei Dauerbetrieb.

Die freiräumlich optische Übertragung soll mittels einer Lichtimpuls-Flankenmodulation, einer Lichtimpuls-Phasenmodulation, einer Lichtimpuls-Frequenzmodulation oder daraus abgeleiteten weiteren Modulationsverfahren erfolgen.

Völlig überraschend wurde nun gefunden, dass die obigen Ziele mit der erfindungsgemässen Vorrichtung gemäss dem unabhängigen Anspruch 1 erreicht werden können.

Der Kern der Erfindung besteht nämlich darin, eine Vorrichtung zur freiräumlichen optischen Informationsübertragung zu schaffen, welche eine gepulste Laserdiode mit einer Wellenlänge in einem Übertragungsfenster bei 904 nm oder 267 nm aufweist.

In einer besonders bevorzugten Ausführungsform umfasst die erfindungsgemässe Vorrichtung zur freiräumlichen optischen Übertragung von Daten-, Sprach-, Ton- und Bildinformationen wenigstens ein Sendemodul (2) mit einer Laserdiode, eine Sendeoptik (4), eine Navigationshilfe und/oder eine Zielvorrichtung (5), eine oder mehrere Schaltplatine(n) und/oder eine oder mehrere Hybrideinheit(en), eine oder mehrere Justiervorrichtung(en), einen Anschluss (6) für den gemeinsamen Einlass von Strom und Steuerimpulsen, sowie gegebenenfalls eine oder mehrere Bedienungs- und/oder Messvorrichtung(en) und/oder Steuersignalanschlüsse, wobei eine Längsachse des Empfangsmoduls 1 und eine Längsachse des Sendemoduls 2 parallel zueinander und in einer Ebene E₁ angeordnet sind, das Sendemodul 2 in einer Halterung 7 montiert ist, welche starr mit einer Grundplatte 8 verbunden ist und das Empfangsmodul 1 in einer Halterung 9 montiert ist, welche starr mit einer Grundplatte 8 verbunden ist.

Vorzugsweise ist das Sendemodul 2 bezüglich seiner Position in einer ersten Halterung 7 nach vorne und nach hinten bewegbar und ist das Empfangsmodul 1 bezüglich seiner Position in einer zweiten Halterung 9 nach vorne und nach hinten bewegbar, wobei ein Teil der zweiten Halterung in ihrer vertikalen und horizontalen Position zur Grundplatte 8 beweglich ist. Besonders bevorzugt ist das Sendemodul 2 innerhalb seiner ersten Halterung 7 und/oder das Empfangsmodul in seiner zweiten Halterung 9 drehbar um die Längsachse und ist im Sendemodul 2 die Laserdiode und/oder im Empfangsmodul 1 die Avalanchephotodiode in einer konisch zugespitzten Halterung enthalten.

Weitere bevorzugte Ausführungsformen der erfindungsgemässen Vorrichtung sind in den abhängigen Ansprüchen definiert oder ergeben sich durch Kombination erfindungswesentlicher Merkmale.

Es zeigen
Figur 1 eine mögliche Anordnung der erfindungsgemässen Vorrichtung,
Figur 2 eine Frontansicht einer bevorzugten Ausführungsform der erfindungsgemässen Vorrichtung,
Figur 3 eine Seitenansicht einer bevorzugten Ausführungsform der erfindungsgemässen Vorrichtung,
Figur 4 eine Heckansicht einer bevorzugten Ausführungsform der erfindungsgemässen Vorrichtung,
Figur 5 einen möglichen Verdrahtungsplan, auch Schaltschema genannt, beginnend nach dem Anschluss 6 für den gemeinsamen Einlass von Strom und Steuerimpulsen,
Figur 6 einen möglichen Schaltplan des Sprechmoduls,
Figur 7 einen möglichen Verdrahtungsplan des Empfangsmoduls 1,
Figur 8 einen möglichen Verdrahtungsplan des Sendemoduls 2,
Figur 9 einen möglichen Verdrahtungsplan der Stromversorgung,
Figur 10 einen möglichen Verdrahtungsplan der Analog/Digital- und Steuerplatine,
Figur 11 einen möglichen Verdrahtungsplan der Empfangsplatine und
Figur 12 einen möglichen Verdrahtungsplan der Sendeplatine.

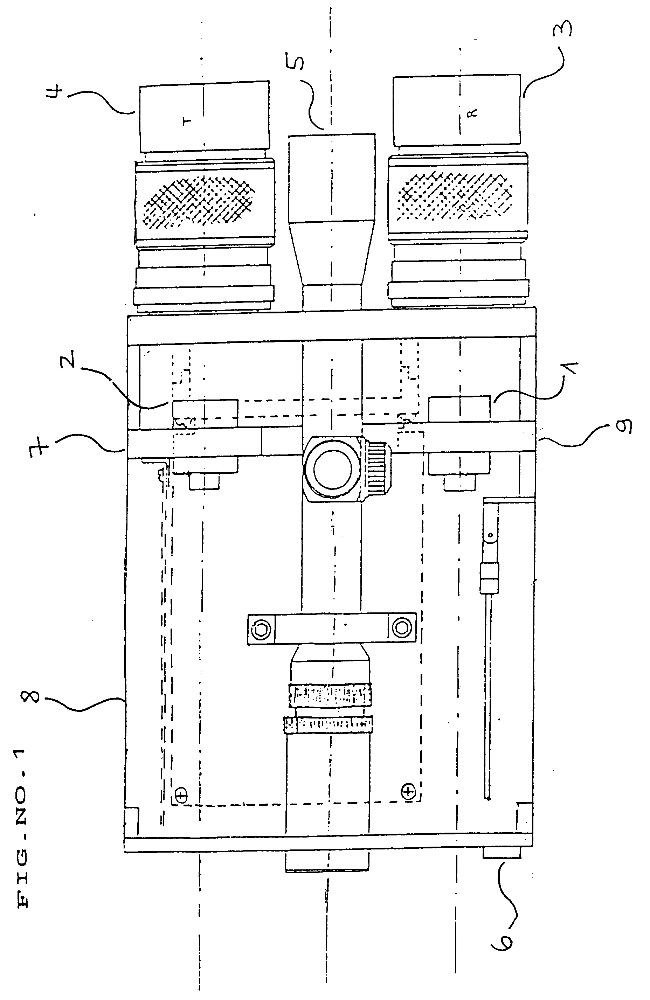

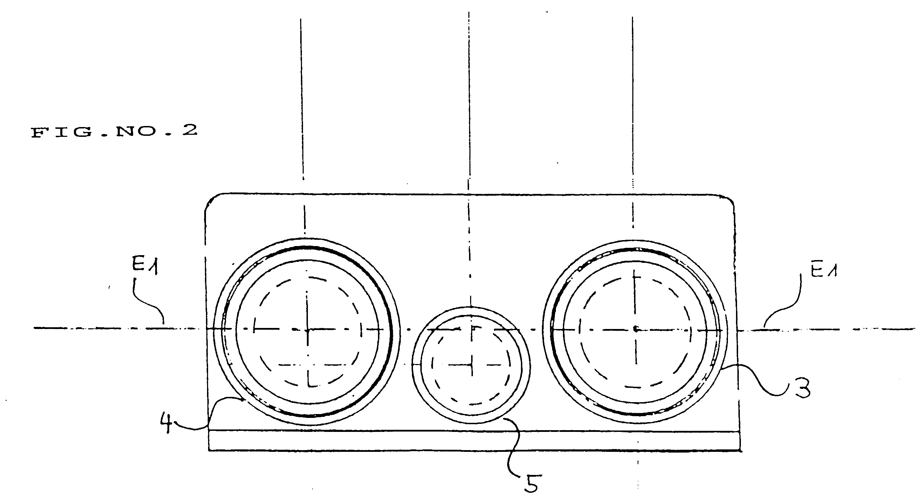

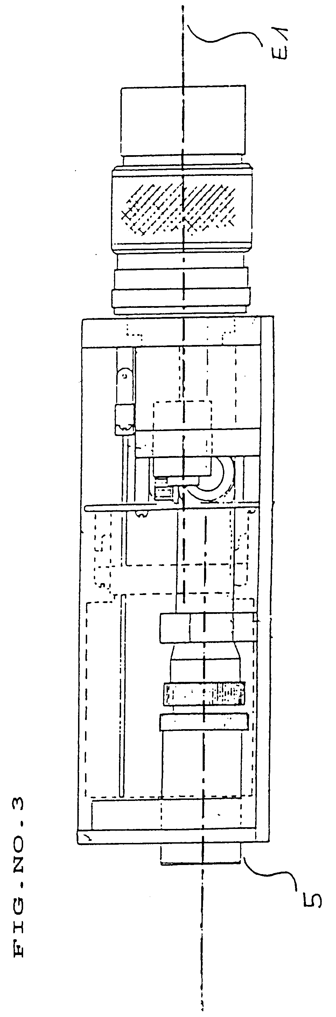

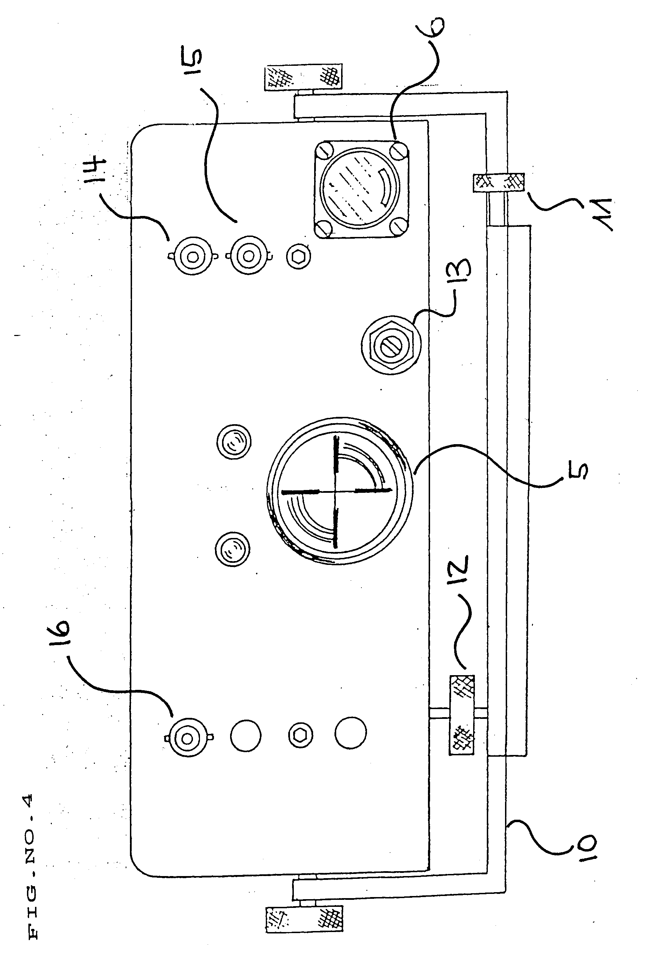

Nachfolgend werden einige Ausführungsbeispiele der vorliegenden Erfindung beschrieben. Dabei wird generell auf die Figuren 1 - 4 Bezug genommen.

Eine bevorzugte Ausführungsform zur Übertragung von Sprach-, Ton- und Dateninformationen umfasst folgende 4 Grundelemente:
- eine Sende- und Empfangseinheit, umfassend die erfindungsgemässe Vorrichtung,
- eine Stromversorgungseinheit,
- eine Sprechgarnitur mit Kabel und Stecker, sowie
- ein Verbindungskabel mit Stecker und Kupplung.

Die oben genannte Sende- und Empfangseinheit umfasst folgende Teile:
- wenigstens ein vorzugsweise zylindrisches Sendemodul 2,
- wenigstens ein vorzugsweise zylindrisches Empfangsmodul 1,
- eine Zielvorrichtung 5 oder eine nicht dargestellte Navigationshilfe,
- eine Sendeoptik 4,
- eine Empfangsoptik 3,
- ein stabiles Gehäuse mit einer Grundplatte 8, einem Gehäusedeckel, einer Frontplatte, einer Heckplatte, einer Halterung 10 mit einer Justiervorrichtung 11 zur horizontalen Einstellung der oben genannten Sende- und Empfangseinheit, sowie mit einer Justiervorrichtung 12 zur vertikalen Einstellung der oben genannten Sende- und Empfangseinheit,
- eine Sendeplatine,
- eine Empfangsplatine,
- eine Analog/Digital- und Steuerplatine,
- ein Bedienungselement 13,
- einen Anschluss 6 für den gemeinsamen Einlass von Strom und Steuerimpulsen,
- eine Signalbuchse 14 zum Einlass von Datensignalen,
- eine Messbuchse 15 zum Messen des Empfangssignales, sowie
- eine Messbuchse 16 zum Messen der Sendesignale.

Alternativ zu den Schaltplatinen können auch eine oder mehrere Hybrideinheiten vorgesehen sein.

Die oben genannte Stromversorgungseinheit umfasst folgende Teile:
- eine Batterie, insbesondere eine Ni/Cd-Batterie,
- eine Netzversorgung 110/230 VAC,
- Signal- und Stromversorgungsbuchsen, sowie
- ein Messinstrument zum Messen der Stromaufnahme der Sende- und Empfangseinheit, sowie zum Messen des Ladestromes der Batterie.

Das zylindrische Sendemodul 2 umfasst eine Laserdiode für das Senden von optischen Lichtimpulsen. Es ist erfindungswesentlich, dass die Laserdiode entweder eine Wellenlänge in einem Bereich zwischen 897 nm und 911 nm, bevorzugt 900 nm - 908 nm, besonders bevorzugt 903 nm - 905 nm, insbesondere eine Wellenlänge von 904 nm, oder eine Wellenlänge in einem Bereich zwischen 260 nm und 274 nm, bevorzugt 263 nm - 271 nm, besonders bevorzugt 266 nm - 268 nm, insbesondere eine Wellenlänge von 267 nm, aufweist und ein gepulster Betrieb der Laserdiode, z. B. mittels einer gepulsten elektronischen Ansteuerung, vorgesehen ist. Insbesondere sind als Modulationsverfahren eine Lichtimpuls-Flankenmodulation, eine Lichtimpuls-Phasenmodulation, eine Lichtimpuls-Frequenzmodulation oder daraus abgeleitete weitere Modulationsverfahren geeignet.

Die Laserdiode ist vorzugsweise in einer konisch zugespitzten Halterung montiert. Die konisch zugespitzte Halterung ist bevorzugt, weil sie die grösstmögliche Anzahl von Justierungen ermöglicht.

Das Sendemodul 2 umfasst vorzugsweise noch eine mehrstufige Verstärkereinheit und die dazu notwendigen Impedanzwandler. Es ist bevorzugt, extrem rauscharme Transistoren zu verwenden, beispielsweise Galliumarsenid-Transistoren. Das Sendemodul 2 umfasst auch noch Buchsen für die Strom- und Signalzuführung sowie zum Messen der Sendesignale.

Das zylindrische Empfangsmodul 1 umfasst eine Photodiode, insbesondere eine Avalanchephotodiode, für das Empfangen von optischen Lichtimpulsen. Lichtimpulse der oben genannten Art sind bevorzugt. Vorzugsweise ist die Empfangsoptik 3 mit einem Lichtfilter ausgerüstet, welches die Bandbreite des Lichtfrequenzspektrums zu Gunsten einer besseren Ausnützung der bevorzugten Lichtfrequenz von 904 nm oder 267 nm einschränkt und insbesondere ein Bandpassfilter ist.

Die Photodiode ist wiederum gemäss obigen Angaben in einer konisch zugespitzten Halterung montiert.

Bevorzugt sind die Laserdiode und die Avalanchephotodiode so justiert und eventuell fixiert, dass sich die Laserdiode im Brennpunkt der Sendeoptik 4 und die Avalanchephotodiode im Brennpunkt der Empfangsoptik 3 befindet.

Das Empfangsmodul 1 umfasst vorzugsweise noch eine rauscharme, breitbandige Videosignal-Verstärkereinheit und die dazu notwendigen Regelkreise zur optimalen Justierung der Verstärkerintensität der Videosignal-Verstärkereinheit.

Das Empfangsmodul 1 umfasst auch noch Buchsen für die Strom- und Signalzuführung sowie zum Messen der Empfangssignale.

Die Zielvorrichtung 5 ist mit der Grundplatte 8 verbunden, in ihrer Längsachse beweglich und zwischen der Empfangsoptik 3 und der Sendeoptik 4 angeordnet. Bevorzugt sind das Empfangsmodul 1 und das Sendemodul 2 in einer horizontalen Ebene E₁ angeordnet, ist die Zielvorrichtung 5 oberhalb oder unterhalb der Ebene E₁ angeordnet und ist die Zielvorrichtung 5 ein Zielfernrohr der herkömmlichen Bauart.

Die Sendeoptik 4 kann ein im Handel erhältliches Objektiv für Photoapparate sein; beispielsweise ein Objektiv mit einer Brennweite von 135 mm und mit einer Lichtweite von 55 mm. Die Blende des Objektives ist vorzugsweise so weit wie möglich geöffnet, damit möglichst viel Licht durch die Objektivlinsen abgestrahlt werden kann.

Die Empfangsoptik 3 kann wiederum ein im Handel erhältliches Objektiv für Photoapparate sein; beispielsweise ein Objektiv mit einer Brennweite von 135 mm und mit einer Lichtweite von 55 mm der oben beschriebenen Art. Die Blende des Objektives ist vorzugsweise so weit wie möglich geöffnet, damit möglichst viel Licht durch die Objektivlinsen eingefangen werden kann.

Das oben genannte stabile Gehäuse kann aus einem geeigneten Metall, einer geeigneten Legierung oder aus einem mit Kohlefasern verstärktem Kunststoff gefertigt sein. Mit Vorteil sind die Grundplatte 8 und ein Gehäuse mit einer solchen Tragvorrichtung verbunden, dass sowohl die Grundplatte 8 als auch das Gehäuse in horizontaler und vertikaler Richtung bewegbar, insbesondere horizontal schwenkbar und vertikal kippbar, sind.

Die Sendeplatine, die Empfangsplatine sowie die Analog/Digital- und Steuerplatine weisen je alle notwendigen elektronischen, signalverarbeitenden Bauteile in Form von passiven und aktiven Bauelementen der herkömmlichen Art auf.

Mit dem Bedienungselement 13 können die oben genannten Regelkreise im Empfangsmodul 1 justiert werden.

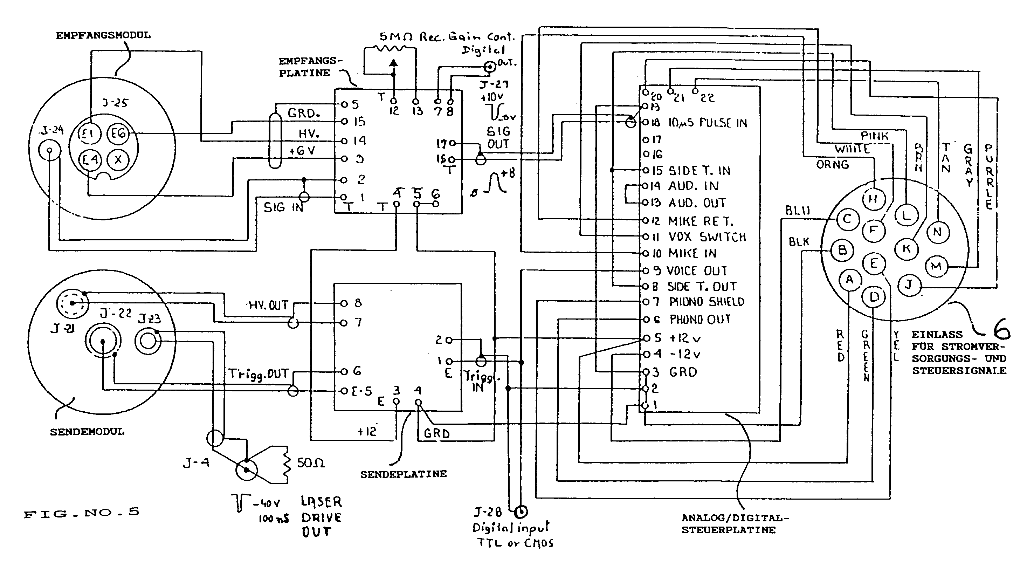

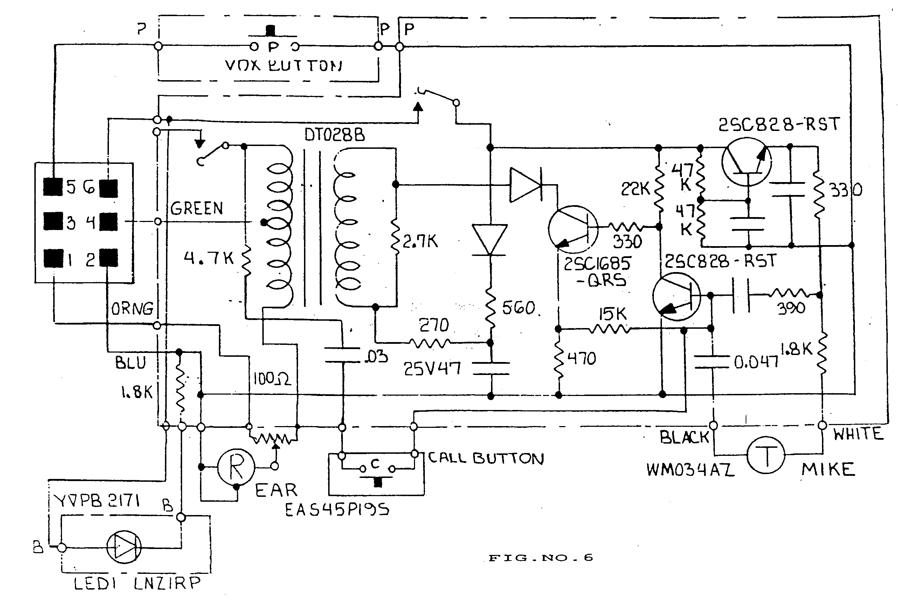

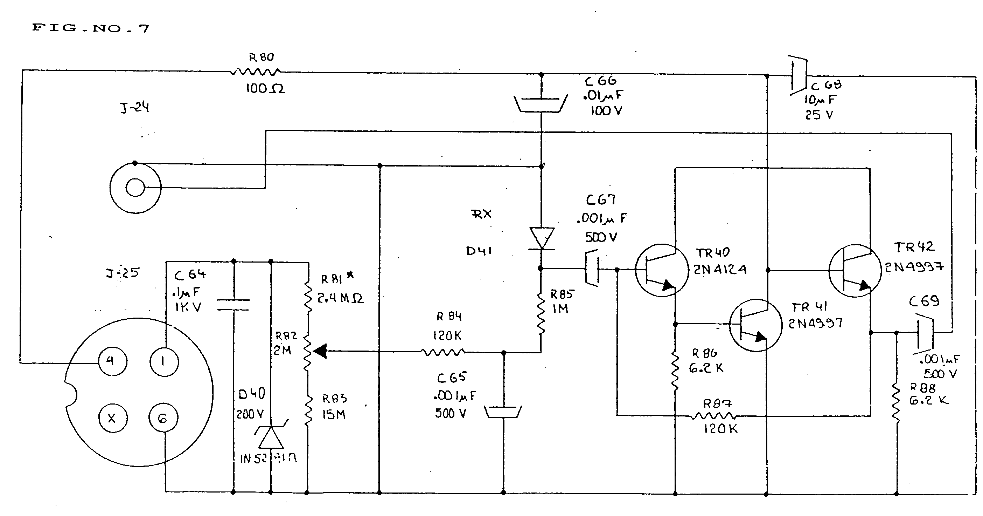

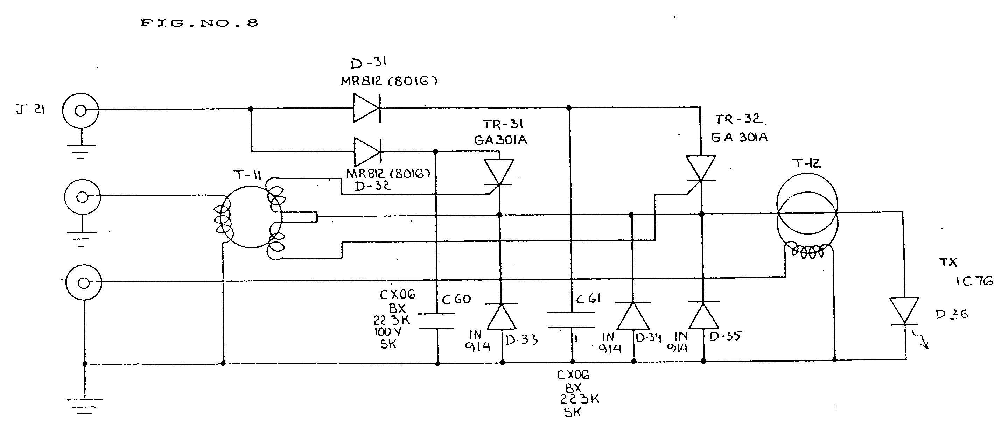

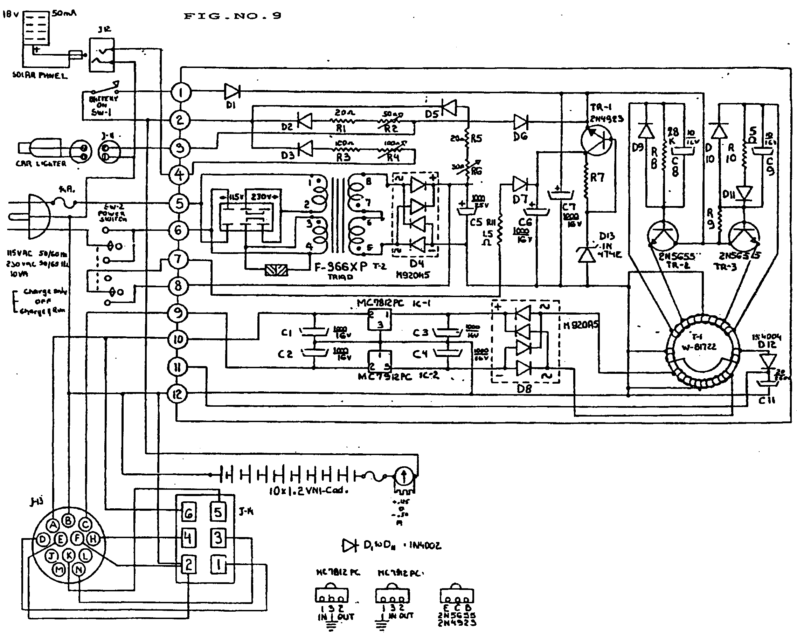

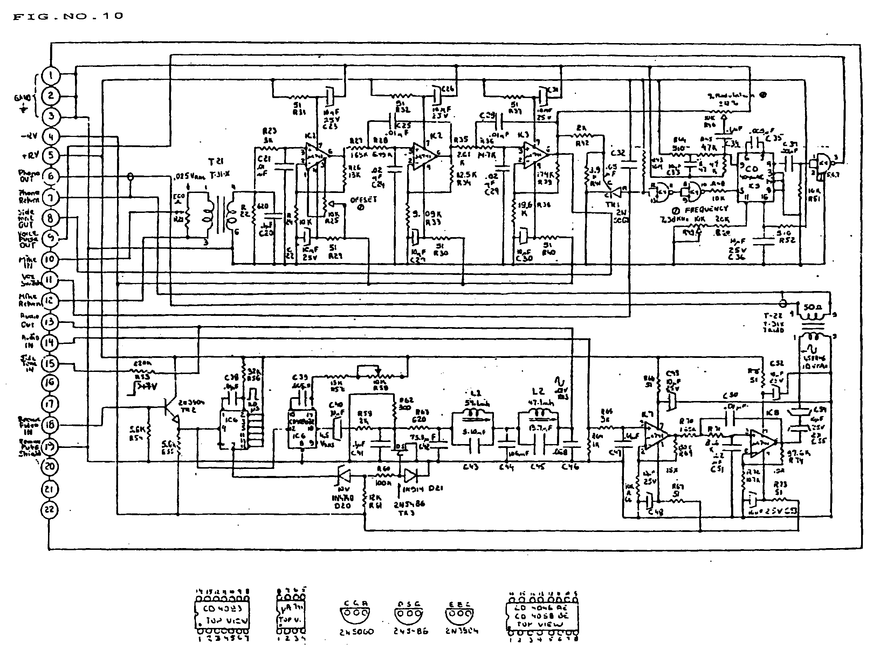

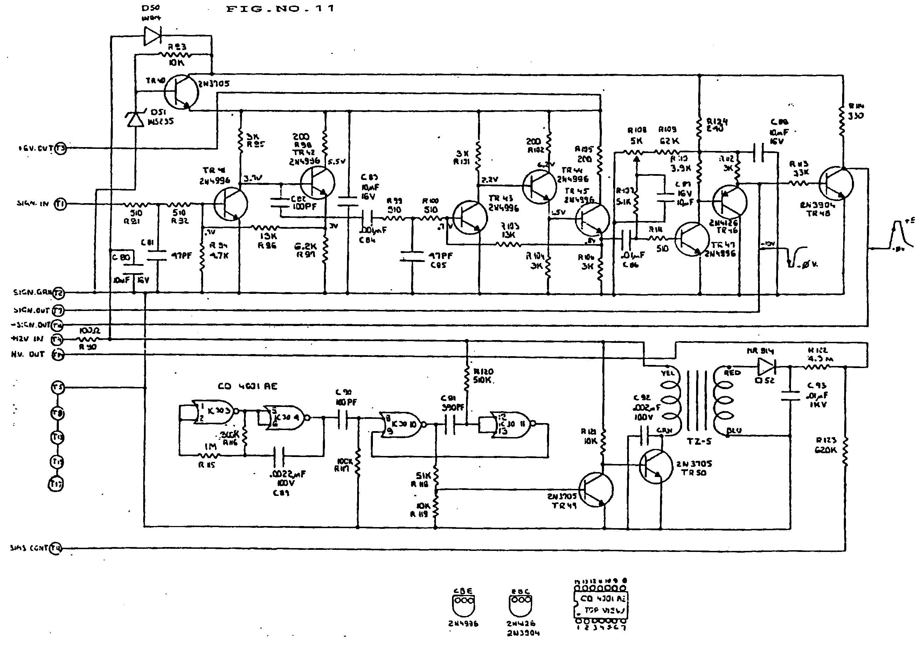

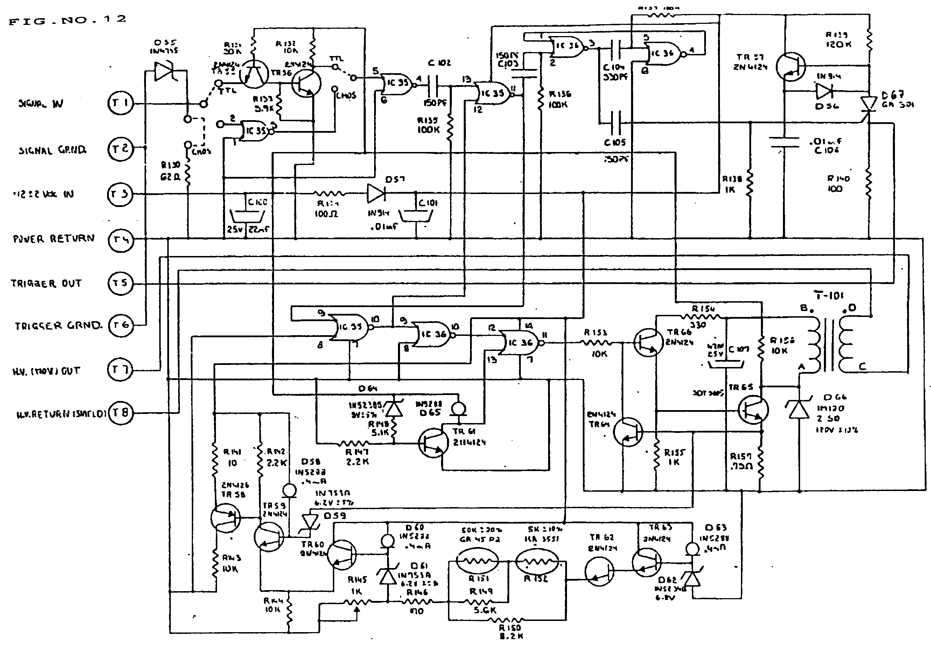

Die in den Figuren 5 bis 12 beschriebenen Schaltschemata bedürfen keiner näheren Beschreibung, weil sie dem Stand der Technik entnommen und dem Fachmann bestens bekannt sind.

Die erfindungsgemässe Vorrichtung ist für eine unidirektionale oder bidirektionale Übertragung geeignet. Beim Simplex-, Semiduplex- oder Vollduplexbetrieb der beiden Sende- und Empfangseinheiten dürfen keine unbeweglichen Festkörper, wie etwa eine Mauer, die Sichtlinie unterbrechen.

Nach heutigem Stand der Technik ist ein passives oder aktives Stören und/oder Abhören und/oder Anpeilen der erfindungsgemässen Vorrichtung praktisch ausgeschlossen.

Der Stromverbrauch beim Betrieb der Sende- und Empfangseinheiten ist deshalb so gering, etwa 0,5 Ampère bei 12 V Gleichspannung und bei Dauerbetrieb, weil eine geringe Sendeleistung ausreicht, um die Verbindung zwischen den beiden genannten Sende- und Empfangseinheiten aufrecht zu erhalten.

Der Strahlungsöffnungswinkel des Sendemoduls 2 beträgt gewöhnlich lediglich etwa 2 Milliradian.

Die beiden Sende- und Empfangseinheiten können fest, zeitweise stationär oder mobil eingesetzt werden.

Die beiden Sende- und Empfangseinheiten können beispielsweise auch als Verbindungsglied zwischen 2 Glasfaseranschlüssen verwendet werden.

Um ein festes Hindernis in der Sichtlinie zweier Sende- und Empfangseinheiten zu überwinden, kann eine oder mehrere Relaisstation(en) aufgebaut werden.

Eine oder mehrere Relaisstation(en) kann (können) auch verwendet werden zur Verlängerung der Übertragungsdistanz.

Ausbreitungsversuche mit einer Vorrichtung gemäss den Figuren 1 - 4 und 5 - 12 wurden im Felde im Grossraum Zürich/Schweiz unter verschiedenen Witterungsbedingungen und über verschiedene Distanzen durchgeführt. Hierfür wurde eine Laserdiode mit einer Emissionswellenlänge von 904 nm, einer mittleren Sendeleistung von 10 mW und einer Spitzenleistung von 10 W eingesetzt sowie eine Avalanchephotodiode und ein Bandpassfilter mit einem spektralen Transmissionsfenster von 904 nm ± 7 nm verwendet.

### Versuch A

- Wetter:: sonnig, windstill, Temperatur 20 °C, relative Luftfeuchtigkeit 70%.
- Distanz:: 5,1 km.

### Versuch B

- Wetter:: dunstig, geschätzte Sicht 3 - 4 km, Temperatur 16 °C, relative Luftfeuchtigkeit 82 %.
- Distanz:: 6 km.

### Versuch C

- Wetter:: dunstig, geschätzte Sicht 1 km, Temperatur 22 °C, relative Luftfeuchtigkeit 85 %.
- Distanz:: 2,5 km.

### Versuch D

- Wetter:: starkes Schneetreiben, geschätzte Sicht 200 m, Temperatur O °C, relative Luftfeuchtigkeit 87 %.
- Distanz:: 3 km.

Eine Station stand hinter einem Fenster mit Doppelverglasung.

### Versuch E

- Wetter:: starker Regenfall, gemessene Sicht 20 m, Temperatur 18 °C, relative Luftfeuchtigkeit 90 %.
- Distanz:: 2,7 km.

Eine Station stand hinter einem Fenster, welches mit Kondenswasser beschlagen war.

Bei allen 5 Versuchsanordnungen war die Übertragung von Sprach- und Toninformationen einwandfrei. Der Stromverbrauch betrug 0,5 Ampère bei 12 V Gleichspannung und bei Dauerbetrieb.

Diese Messresultate zeigen, dass durch die Erfindung eine Übertragung auch bei schwierigen Sichtverhältnissen, insbesondere bei Übertragungsdistanz - zu - Sichtweite Verhältnissen von 40% ...60% in Dunst, 7% in Schnee und 1% in starkem Regen, erreichbar ist. Dieser Effekt ist um so überraschender, als die gewählte Wellenlänge nicht in einem Minimum des Absorptionsspektrums von Wasser liegt, sondern in einer Flanke eines schwachen Absorptionspeaks. Ähnlich gute Übertragungsverhältnisse sind für das zuvor erwähnte Wellenlängenfenster bei 267 nm zu erwarten.

Ein weiteres Anliegen der Erfindung besteht darin, eine Vorrichtung zur bidirektionalen optischen Übertragung von Daten usw. zu schaffen, die besonders einfach zu justieren ist und deren Justierung besonders störunempfindlich ist.

Hierbei besteht die Lösung in einer Vorrichtung zur freiräumlichen optischen Übertragung von Daten-, Sprach-, Ton- und Bildinformationen, welche Vorrichtung wenigstens ein Empfangsmodul 1, ein Sendemodul 2, eine Empfangsoptik 3, eine Sendeoptik 4, eine Navigationshilfe und/oder eine Zielvorrichtung 5, eine oder mehrere Schaltplatine(n) und/oder eine oder mehrere Hybrideinheit(en), eine oder mehrere Justiervorrichtung(en), einen Anschluss 6 für den gemeinsamen Einlass von Strom und Steuerimpulsen, sowie gegebenenfalls eine oder mehrere Bedienungs- und/oder Messvorrichtung(en) und/oder Steuersignalanschlüsse umfasst, wobei im Sendemodul (2) eine Laserdiode und im Empfangsmodul 1 eine Photodiode enthalten ist, eine Längsachse des Empfangsmoduls 1 und eine Längsachse des Sendemoduls 2 parallel zueinander und in einer Ebene E₁ angeordnet sind, das Sendemodul 2 in einer Halterung 7 montiert ist, welche starr mit einer Grundplatte 8 verbunden ist und das Empfangsmodul 1 in einer Halterung 9 montiert ist, welche starr mit der Grundplatte 8 verbunden ist. Weitere bevorzugte Ausführungsformen ergeben sich hinsichtlich des mechanischen Aufbaus aus den Fig. 1 - 4 mit den dazugehörigen Erläuterungen und hinsichtlich des elektronischen Aufbaus aus den Fig. 5 - 12. Dabei ist die optische Übertragung im sichtbaren oder unsichtbaren Lichtfrequenzspektrum möglich, wobei die Übertragungsfenster im Bereich von 904 nm bis 267 nm bevorzugt sind. Speziell bevorzugt sind Lichtimpulse im für das menschliche Auge nicht sichtbaren Lichtfrequenzbereich, insbesondere die Übertragungsfenster bei 904 nm und bei 267 nm.

## Patentansprüche

1. Vorrichtung zur freiräumlichen optischen Übertragung von Daten-, Sprach-, Ton- und Bildinformationen, wobei die Vorrichtung wenigstens ein Sendemodul (2) mit einer Laserdiode, eine Sendeoptik (4), eine Navigationshilfe und/oder eine Zielvorrichtung (5), eine oder mehrere Schaltplatine(n) und/oder eine oder mehrere Hybrideinheit(en), eine oder mehrere Justiervorrichtung(en), einen Anschluss (6) für den gemeinsamen Einlass von Strom und Steuerimpulsen, sowie gegebenenfalls eine oder mehrere Bedienungs- und/oder Messvorrichtung(en) und/oder Steuersignalanschlüsse umfasst, dadurch gekennzeichnet, dass
a) die Laserdiode entweder eine Wellenlänge in einem Bereich zwischen 897 nm und 911 nm, bevorzugt 900 nm - 908 nm, besonders bevorzugt 903 nm - 905 nm, insbesondere eine Wellenlänge von 904 nm, oder eine Wellenlänge in einem Bereich zwischen 260 nm und 274 nm, bevorzugt 263 nm - 271 nm, besonders bevorzugt 266 nm - 268 nm, insbesondere eine Wellenlänge von 267 nm, aufweist und
b) ein gepulster Betrieb der Laserdiode vorgesehen ist.

2. Vorrichtung nach Anspruch 1, dadurch gekennzeichnet, dass
a) eine Lichtimpuls-Flankenmodulation, eine Lichtimpuls-Phasenmodulation, eine Lichtimpuls-Frequenzmodulation oder daraus abgeleitete weitere Modulationsverfahren vorgesehen sind,
b) wenigstens ein Empfangsmodul (1) mit einer Avalanchephotodiode und eine Empfangsoptik (3) vorgesehen sind und
c) die Empfangsoptik (3) mit einem Lichtfilter ausgerüstet ist, welches die Bandbreite des Lichtfrequenzspektrums zu Gunsten einer besseren Ausnützung der bevorzugten Lichtfrequenz von 904 nm oder 267 nm einschränkt und insbesondere ein Bandpassfilter ist.

3. Vorrichtung nach Anspruch 2, dadurch gekennzeichnet, dass
a) eine Längsachse des Empfangsmoduls (1) und eine Längsachse des Sendemoduls (2) parallel zueinander und in einer Ebene (E₁) angeordnet sind,
b) das Sendemodul (2) in einer Halterung (7) montiert ist, welche starr mit einer Grundplatte (8) verbunden ist und
c) das Empfangsmodul (1) in einer Halterung (9) montiert ist, welche starr mit der Grundplatte (8) verbunden ist.

4. Vorrichtung nach Anspruch 3, dadurch gekennzeichnet, dass
a) das Sendemodul (2) bezüglich seiner Position in der Halterung (7) nach vorne und nach hinten bewegbar ist,
b) das Empfangsmodul (1) bezüglich seiner Position in der Halterung (9) nach vorne und nach hinten bewegbar ist, wobei ein Teil der Halterung in ihrer vertikalen und horizontalen Position zur Grundplatte (8) beweglich ist.

5. Vorrichtung nach Anspruch 4, dadurch gekennzeichnet, dass
a) das Sendemodul (2) innerhalb seiner Halterung (7) drehbar um seine Längsachse ist,
b) im Sendemodul (2) die Laserdiode in einer konisch zugespitzten Halterung enthalten ist und
c) insbesondere das Sendemodul (2) zylinderförmig ist.

6. Vorrichtung nach Anspruch 4, dadurch gekennzeichnet, dass
a) das Empfangsmodul (1) innerhalb seiner Halterung (9) drehbar um seine Längsachse ist,
b) im Empfangsmodul (1) die Avalanchephotodiode in einer konisch zugespitzten Halterung enthalten ist und
c) insbesondere das Empfangsmodul (1) zylinderförmig ist.

7. Vorrichtung nach einem der Ansprüche 2 bis 6, dadurch gekennzeichnet, dass
a) die Laserdiode sich im Brennpunkt der Sendeoptik (4) befindet und
b) die Avalanchephotodiode sich im Brennpunkt der Empfangsoptik (3) befindet.

8. Vorrichtung nach Anspruch 7, dadurch gekennzeichnet, dass die Zielvorrichtung (5) mit der Grundplatte (8) verbunden ist, in ihrer Längsachse beweglich ist und zwischen der Empfangsoptik (3) und der Sendeoptik (4) angeordnet ist.

9. Vorrichtung nach Anspruch 8, dadurch gekennzeichnet, dass
a) das Empfangsmodul (1) und das Sendemodul (2) in einer horizontalen Ebene (E₁) angeordnet sind,
b) die Zielvorrichtung (5) oberhalb oder unterhalb der Ebene (E₁) angeordnet ist und
c) die Zielvorrichtung (5) ein Zielfernrohr ist.

10. Vorrichtung nach Anspruch 9, dadurch gekennzeichnet, dass die Grundplatte (8) und ein Gehäuse mit einer solchen Tragvorrichtung verbunden sind, dass sowohl die Grundplatte (8) als auch das Gehäuse in horizontaler und vertikaler Richtung bewegbar sind.
